# DEMANDE DE BREVET EUROPEEN

(11) **EP 4 843 815 A1**
(43) Date de publication de la demande: **25.11.2026**
(21) Numéro de dépôt: 26173384.4
(22) Date de dépôt: 20.04.2026
(51) Int. Cl.: B60K 35/232

(54) **PROCÉDÉ ET DISPOSITIF DE CONTRÔLE D'UN SYSTÈME DE VISION TÊTE HAUTE MULTIPLANS D'UN VÉHICULE POUR L'AFFICHAGE DE CONTENUS GRAPHIQUES D'UN SYSTÈME LAS**

(30) Priorité: 21.05.2025 FR 2505464
(71) Demandeur: Stellantis Auto SAS, 78300 Poissy (FR)
(72) Inventeur: POITEVIN, Thomas, 91620 NOZAY (FR); BAYARD, Loic, 91470 FORGES LES BAINS (FR); ZAIDI, Fares, 78340 LES CLAYES SOUS BOIS (FR)
(74) Mandataire: ESIP

(57) **Abrégé**

La présente invention concerne un procédé et un dispositif de contrôle d'un système de vision tête-haute (2), dit VTH, multiplans d'un véhicule, le système VTH multiplans (2) étant configuré pour un affichage d'images dans une pluralité de plans image (201, 202, 203), le véhicule embarquant un système de sécurité latérale active, dit système LAS. A cet effet, un niveau de risque associé à un franchissement d'une ligne de marquage au sol est déterminé en fonction de données obtenues d'un ensemble de capteurs et/ou systèmes embarqués dans le véhicule. Un plan image est sélectionné parmi la pluralité de plans image (201, 202, 203) en fonction du niveau de risque. Le système VTH multiplans (2) est contrôlé pour afficher un contenu graphique représentatif d'une alerte de sécurité sur le plan image sélectionné.

## Description

### Domaine technique

L'invention concerne les procédés et dispositifs de contrôle d'un système de vision tête haute multiplans, dit système VTH multiplans, d'un véhicule, notamment mais non exclusivement un véhicule automobile. L'invention concerne également un procédé et un dispositif d'aide à la conduite d'un véhicule. L'invention concerne également un procédé et un dispositif de contrôle d'affichage de contenus graphiques d'un système de sécurité latérale active, dit système LAS (de l'anglais « Lateral Active Safety »), d'un véhicule.

### Arrière-plan technologique

Les véhicules contemporains sont nombreux à être équipés de systèmes d'aide à la conduite, dits systèmes ADAS (de l'anglais « Advanced Driver-Assistance System » ou en français « Système d'aide à la conduite avancé »), notamment des systèmes ADAS prévus pour améliorer la sécurité dans les véhicules et sur la route.

Parmi ces systèmes ADAS, il est connu un système de sécurité latérale active, dit système LAS (de l'anglais « Lateral Active Safety »). Un tel système permet de contrôler la sécurité latérale du véhicule, par exemple en alertant le conducteur en cas de franchissement d'une ligne de marquage au sol et/ou en maintenant de manière active le véhicule dans sa voie, notamment pour éviter les collisions latérales. Pour ce faire, le système LAS utilise des données obtenues de capteurs tels que des caméras, des radars ou des capteurs à ultrasons pour surveiller les marquages au sol, les bords de la chaussée et la présence d'autres véhicules à proximité latérale. En cas de franchissement de ligne sans activation du clignotant, le système peut générer une alerte sonore, visuelle ou vibrante. Un système LAS correspond par exemple à un des systèmes suivants ou à un système mettant en œuvre une ou plusieurs fonctions des systèmes suivants : système LKA (de l'anglais « Lane Keeping Assist » ou en français « assistance au maintien dans la voie ») configuré pour corriger automatiquement la trajectoire du véhicule en agissant sur la direction, système LDW (de l'anglais « Lane Departure Warning » ou en français « alerte de franchissement involontaire de ligne ») configuré pour la génération d'alerte de franchissement de ligne, système BSD (de l'anglais « Blind Spot Detection » ou en français « détection d'angle mort ») configuré pour signaler la présence de véhicules dans les angles morts.

La multitude de messages, informations et autres contenus générés par un système LAS, et par exemple affichés sur un écran du véhicule, à destination du conducteur du véhicule peuvent perturber le conducteur lors de la conduite du véhicule et masquer les messages et informations importantes en termes de sécurité, tels que les messages d'alerte en cas de franchissement de ligne et/ou en cas de risque de collision avec un autre véhicule.

### Résumé de la présente invention

Un objet de la présente invention est de résoudre au moins l'un des problèmes de l'arrière-plan technologique décrit précédemment.

Un objet de la présente invention est par exemple d'améliorer l'accès aux informations et messages affichés pour la prévention des risques pour un système LAS d'un véhicule.

Un autre objet de la présente invention est d'améliorer la sécurité d'un véhicule.

Selon un premier aspect, la présente invention concerne un procédé de contrôle d'un système de vision tête haute multiplans, dit système VTH multiplans, d'un véhicule, le système VTH multiplans étant configuré pour un affichage d'images dans une pluralité de plans image, le véhicule embarquant un système de sécurité latérale active, dit système LAS, le procédé étant mis en œuvre par au moins un processeur et comprenant les étapes suivantes :
- détermination d'un niveau de risque associé à un franchissement d'une ligne de marquage au sol en fonction de données obtenues d'un ensemble de capteurs et/ou systèmes embarqués dans le véhicule ;
- sélection d'un plan image, dit plan image sélectionné, parmi la pluralité de plans image en fonction du niveau de risque ;
- contrôle du système VTH multiplans pour afficher un contenu graphique représentatif d'une alerte de sécurité générée par le système LAS sur le plan image sélectionné.

L'utilisation d'un niveau de risque associé au franchissement d'une ligne de marquage au sol pour déterminer sur quel plan image projeter le contenu graphique représentant l'alerte permet d'améliorer la gestion des messages d'alerte générés, par exemple en affichant en premier plan une alerte associée à un niveau de risque élevé pour le véhicule et en arrière-plan d'autres alertes moins critiques.

Le conducteur du véhicule peut ainsi évaluer le niveau de risque et la criticité de l'information ou alerte affichée et prendre les actions nécessaires pour réduire le risque associé au franchissement d'une ligne, tel qu'un risque de collision, améliorant de ce fait la sécurité du véhicule et des autres usagers de la route.

Selon une variante, les données appartiennent à un ensemble de données comprenant :
- des premières données représentatives d'une distance entre le véhicule et la ligne de marquage au sol ;
- des deuxièmes données représentatives d'un nombre de franchissements de la ligne de marquage au sol pendant un intervalle temporel d'une durée déterminée ; et
- des troisièmes données représentatives de présence d'au moins un autre véhicule sur une voie de circulation adjacente à une voie de circulation courante du véhicule, la voie de circulation courante et la voie de circulation adjacente étant séparée par la ligne de marquage au sol ; et
- des quatrièmes données représentatives de géométrie d'au moins une portion de route située devant le véhicule selon un sens de circulation du véhicule.

Selon une autre variante, une information de distance étant associée à chaque plan image de la pluralité de plans image, l'information de distance étant représentative d'une distance entre un point de vue associé à une position de conduite du véhicule et chaque plan image, la sélection du plan image étant telle que la distance entre le plan image sélectionné et le point de vue diminue lorsque le niveau de risque augmente.

Selon une variante supplémentaire, le procédé comprend en outre une étape de comparaison du niveau de risque à un ensemble de valeurs seuils comprenant au moins une valeur seuil, la sélection du plan image étant en outre fonction d'un résultat de la comparaison.

Selon encore une variante, l'ensemble de valeurs seuils comprenant une première valeur seuil et une deuxième valeur seuil, la deuxième valeur seuil étant supérieure à la première valeur seuil,
le contenu graphique étant affiché sur un premier plan image de la pluralité de plans images lorsque le niveau de risque dépasse la première valeur seuil, une première information de distance étant associée au premier plan image, la première information de distance étant représentative d'une première distance entre le point de vue et le premier plan image,
le contenu graphique étant affiché sur un deuxième plan image de la pluralité de plans images lorsque le niveau de risque dépasse la deuxième valeur seuil, une deuxième information de distance étant associée au deuxième plan image, la deuxième information de distance étant représentative d'une deuxième distance entre le point de vue et le deuxième plan image, la deuxième distance étant inférieure à la première distance.

Selon une variante additionnelle, le contenu graphique est fonction du niveau de risque.

Selon une variante supplémentaire, le contrôle du système VTH multiplans comprend :
- une sélection d'un projecteur parmi un ensemble de projecteurs du système VTH multiplans pour projeter le contenu graphique ; et/ou
- une sélection d'un miroir parmi un ensemble de de miroirs du système VTH multiplans pour recevoir un faisceau lumineux représentatif du contenu graphique ; et/ou
- un contrôle d'une orientation du miroir vis-à-vis du projecteur.

Selon encore une variante, le contenu graphique étant représenté par une image, le procédé comprend en outre une étape de traitement de l'image en fonction du plan image sélectionné.

Selon un deuxième aspect, la présente invention concerne un dispositif de contrôle d'un système de vision tête haute multiplans d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement une partie d'un habitacle d'un véhicule embarquant un système de vision tête-haute multiplans, selon un exemple de réalisation particulier de la présente invention, selon un exemple de réalisation particulier de la présente invention ;
[Fig. 2] illustre schématiquement le système de vision tête-haute multiplans du véhicule de la figure 1, selon un premier exemple de réalisation particulier et non limitatif de la présente invention ;
[Fig. 3] illustre un dispositif configuré pour contrôler le système de vision tête haute multiplans du véhicule de la figure 1, selon un exemple de réalisation particulier et non limitatif de la présente invention.
[Fig. 4] illustre un organigramme des différentes étapes d'un procédé de contrôle du système de vision tête haute multiplans du véhicule de la figure 1, selon un exemple de réalisation particulier et non limitatif de la présente invention.

### Description des exemples de réalisation

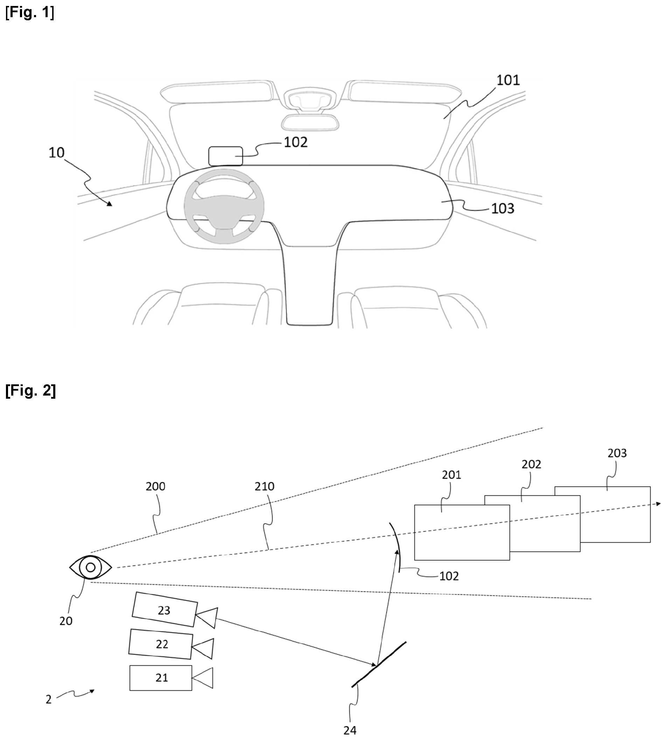

Un procédé et un dispositif de contrôle d'un système de vision tête haute multiplans, dit système VTH multiplans, d'un véhicule vont maintenant être décrits dans ce qui va suivre en référence conjointement aux figures 1 à 4. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

La figure 1 illustre schématiquement une partie d'un habitacle d'un véhicule 10, selon un exemple de réalisation particulier et non limitatif de la présente invention.

Le véhicule 10 correspond par exemple à un véhicule à moteur thermique, à moteur(s) électrique(s) ou encore un véhicule hybride avec un moteur thermique et un ou plusieurs moteurs électriques. Le véhicule 10 correspond ainsi par exemple à un véhicule terrestre, par exemple une automobile, un camion, un car.

Le véhicule 10 embarque avantageusement un système de vision tête-haute multiplans, dit système VTH multiplans par la suite (aussi appelé système HUD (de l'anglais « Head Up Display » ou en français « Affichage Tête Haute »)), configuré pour afficher un ensemble d'images à différentes distances ou différentes profondeurs d'un point de vue correspondant au conducteur du véhicule 10, c'est-à-dire sur différents plans image, une profondeur ou distance déterminée vis-à-vis du point de vue étant associée à chaque plan image. Chaque image comprend un ensemble d'objets graphiques affichés par projection sur une surface transparente ou semi-transparente.

La surface transparente ou semi-transparente correspond par exemple à une lame ou lamelle 102 arrangée sur la planche de bord du véhicule 10, par exemple au-dessus et en arrière du volant par rapport à un point de vue correspondant au point de vue selon lequel un conducteur est censé regarder la route devant lui lorsqu'il conduite le véhicule 10. Selon un autre exemple, la surface transparente ou semi-transparente correspond à une zone déterminée du pare-brise 101 sur laquelle est projeté l'ensemble d'images.

Le système VTH correspond par exemple à un système dit à réalité augmentée, dite AR (de l'anglais « Augmented Reality »), configuré pour incruster des objets virtuels dans le champ de vision du conducteur, par exemple sur la lamelle 102 ou le pare-brise 101 du véhicule 10, de manière à superposer les objets virtuels sur la scène routière réelle. La projection des images de l'objet graphique est par exemple contrôlée par un ou plusieurs calculateurs du réseau embarqué du véhicule 10, par exemple par le calculateur du système d'infodivertissement, dit calculateur IVI (de l'anglais « In-Vehicle Infotainment » ou en français « Infodivertissement embarqué ») du véhicule 10.

Le système VTH multiplans comprend un ou plusieurs projecteurs d'image, par exemple encastré dans un logement prévu dans la planche de bord 103 du véhicule 10, associés à un ou plusieurs miroirs.

Un exemple d'un tel système VTH est décrit avec plus de détails en regard de la figure 2.

Le véhicule 10 embarque en outre un système de sécurité latérale active, noté système LAS. Un tel système LAS correspond par exemple à l'un des systèmes suivants ou à un système mettant en œuvre un ensemble de fonctions mises en œuvre par un ou plusieurs des systèmes suivants :
- un système LDW (de l'anglais « Lane Departure Warning » ou en français « alerte de franchissement involontaire de ligne », aussi appelé système AFIL) configuré pour alerter le conducteur lorsqu'un franchissement de ligne est détecté sans activation des clignotants ; et/ou
- un système LKA (de l'anglais « Lane Keeping Assist » ou en français « assistance au maintien dans la voie ») configuré pour agir sur la direction pour maintenir le véhicule 10 dans sa voie de circulation ; et/ou
- un système LCA (de l'anglais « Lane Centering Assist » ou en français « assistance au centrage dans la voie ») configuré pour maintenir le véhicule 10 centré entre les lignes de délimitation, plus particulièrement en conduite assistée ; et/ou
- un système BSD (de l'anglais « Blind Spot Detection » ou en français « détection d'angle mort ») configuré pour détecter les véhicules présents dans les zones non visibles (angles morts des rétroviseurs extérieurs) par le conducteur ; et/ou
- un système RCTA (de l'anglais « Rear Cross Traffic Alert » ou en français « alerte de circulation transversale arrière ») configuré pour détecter un autre véhicule approchant latéralement lors d'une marche arrière du véhicule 10 ; et/ou
- un système d'évitement de collision latérale active configuré pour combiner les données de plusieurs capteurs pour effectuer une correction de trajectoire ou un freinage différentiel en cas de risque imminent de collision latérale avec un autre véhicule ; et/ou
- un système de détection de changement de voie involontaire avec intervention active configuré pour déclencher une manœuvre corrective pour éviter une sortie de voie non intentionnelle du véhicule 10.

Un système LAS correspond ainsi à un système d'aide à la conduite configuré pour surveiller, avertir ou corriger la position latérale du véhicule 10 afin de prévenir les sorties de voie ou les collisions latérales avec un autre véhicule.

Le système LAS s'appuie par exemple sur des données reçues d'un ou plusieurs capteurs du véhicule 10 configurés pour la détection d'objet et/ou d'un ou plusieurs systèmes embarqués, tels que par exemple :
- un ou plusieurs radars à ondes millimétriques arrangés sur le véhicule 10, par exemple à l'avant du véhicule 10 ; chaque radar est adapté pour émettre des ondes électromagnétiques et pour recevoir les échos de ces ondes renvoyées par un ou plusieurs objets, dans le but de détecter des obstacles et leurs distances vis-à-vis du véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du véhicule 10 se trouvant dans le champ de vision de la ou les caméras, notamment pour déterminer une distance entre le véhicule 10 et une ligne de marquage au sol correspondant à la ligne de signalisation routière horizontale la plus proche du véhicule 10, cette distance étant par exemple exprimée en mètre et mesurée entre la ligne de marquage au sol de laquelle le véhicule 10 se rapproche et un point ou une ligne de référence du véhicule 10, par exemple l'axe longitudinal du véhicule 10 ou une ligne représentant le côté du véhicule 10 le plus proche de la ligne de marquage au sol, ces données étant obtenues par analyse de données reçues de la caméra ; et/ou
- un système ou dispositif de détermination embarquée dans le véhicule 10 configuré pour déterminer des informations représentatives de la géométrie de la route devant le véhicule 10, par exemple la courbure, un rétrécissement de la chaussée, la présence d'une portion correspondant à une montée suivie d'une portion correspondant à une descente (avec une limite de visibilité associée), etc., de telles informations étant obtenues de données de cartographie routière enregistrée dans une mémoire du véhicule 10 ou reçue d'un dispositif distant de type serveur via une connexion sans fil.

Les différents systèmes du véhicule 10, notamment le système VTH multiplans et le système LAS, sont chacun contrôlés par un ou plusieurs calculateurs. Ces calculateurs forment par exemple une architecture multiplexée pour la réalisation de différents services utiles pour le bon fonctionnement du véhicule et pour assister le conducteur et/ou les passagers du véhicule dans le contrôle du véhicule 10. Les calculateurs communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458), LIN (de l'anglais « Local Interconnect Network » ou en français « Réseau interconnecté local ») ou Ethernet (selon la norme ISO/IEC 802-3).

La figure 2 illustre un système de vision tête-haute 2 multiplans du véhicule 10, selon un exemple de réalisation particulier et non-limitatif de l'invention.

Le système VTH multiplans 2 est adapté pour l'affichage de différents contenus graphiques dans différents plans image 201, 202, 203, tel que décrit précédemment en regard de la figure 1.

La figure 2 illustre certains éléments formant le système VTH 2. Pour des raisons de clarté, les échelles des éléments ainsi que les différences d'échelles entre les différents éléments ne sont pas respectées. Pour les mêmes raisons de clarté, les éléments sont représentés selon différentes respectives.

Selon l'exemple de la figure 2, le nombre de plans images obtenus par le système VTH multiplans 2 est égal à 3. Bien entendu, l'invention ne se limite pas à un tel système VTH multiplans mais s'étend à tout système VTH multiplans configuré pour l'affichage de contenus graphiques dans 2 ou plus plans image.

Selon un exemple de réalisation, le système VTH est configuré pour afficher des images représentatives des contenus graphiques sur un nombre défini de plans images, par exemple 2, 3, 5 ou 10 plans image, chaque plan image étant à une profondeur ou distance déterminée vis-à-vis du point de vue du conducteur du véhicule 10.

Selon un autre exemple de réalisation, le système VTH est configuré pour afficher les images représentatives des contenus graphiques sur une multitude de plans images dont la distance vis-à-vis du point de vue du conducteur du véhicule 10 est contrôlable pour varier de manière continue entre par exemple une distance ou profondeur minimale et une distance ou profondeur maximale.

Le système VTH multiplans 2 selon l'exemple particulier de la figure 2 comprend 3 projecteurs d'image 21, 22, 23 chacun configuré pour émettre un faisceau lumineux selon une direction principale d'émission dirigée vers un miroir 21. Les informations d'image transportées par chaque faisceau lumineux varient temporellement selon l'image de la séquence à projeter sur la lamelle 102 (ou selon une variante sur le pare-brise 101) après réflexion sur le miroir 24. Chaque projecteur d'image 21, 22, 23 correspond par exemple à un projecteur mono-focale, par exemple du type « émissif », le projecteur correspondant par exemple à un scanner laser comprenant au moins une diode laser, par exemple trois diodes laser pour générer trois couleurs différentes, par exemple RGB (une diode par couleur RGB (de l'anglais « Red, Green, Blue » ou en français « rouge, vert, bleu »)).

Chaque projecteur d'image 21, 22, 23 est orienté selon un angle différent vis-à-vis de la surface réfléchissante du miroir pour projeter des contenus graphiques sur les différents plan image 201, 202, 203. Par exemple, le premier projecteur d'image 21 est orienté selon un premier angle par rapport au miroir 24 pour que le contenu graphique projeté par ce premier projecteur 21 soit affiché dans le premier plan image 201, le deuxième projecteur d'image 22 est orienté selon un deuxième angle par rapport au miroir 24 pour que le contenu graphique projeté par ce deuxième projecteur 22 soit affiché dans le deuxième plan image 202 et le troisième projecteur d'image 23 est orienté selon un troisième angle par rapport au miroir 24 pour que le contenu graphique projeté par ce troisième projecteur 23 soit affiché dans le troisième plan image 203.

Selon une variante, le système VTH multiplans comprend 3 projecteurs d'image 21, 22, 23 et 3 miroirs, chaque projecteur d'image 21, 22, 23 projetant un faisceau lumineux vers un miroir différent de l'ensemble de 3 miroirs, chacun des miroirs étant orienté pour réfléchir le faisceau lumineux reçu vers la surface transparente ou semi-transparente 101 ou 102 et afficher un contenu graphique associé dans un plan image différent de l'ensemble de plans image 201, 202, 203.

Selon une autre variante, le système VTH multiplans comprend un seul projecteur d'image associé à 3 miroirs pour afficher différents contenus graphiques dans les 3 plans image 201, 202 et 203.

Selon une autre variante, le système VTH multiplans comprend un seul projecteur d'image associé à un ou plusieurs miroirs dont l'orientation vis-à-vis du projecteur d'image est contrôlable. A cet effet, le ou les miroirs sont montés sur un arbre rotatif d'un moteur électrique pour contrôler l'orientation du miroir. Selon un autre exemple, le projecteur est contrôlable pour modifier son orientation vis-à-vis du ou des miroirs. Ces variantes de réalisation permettent d'obtenir une multitude de plans image selon des distances ou profondeurs vis-à-vis du point de vue du conducteur du véhicule 10 ajustables de manière continue sur un intervalle de distances ou profondeurs déterminé, c'est-à-dire entre une distance ou profondeur minimale et une distance ou profondeur maximale.

Selon un exemple de réalisation particulier, les projecteurs d'image 21, 22, 23 sont agencés de manière que les plans image 201, 202, 203 associés à chaque projecteur 21, 22, 23, respectivement, soient alignés selon une direction principale 210 d'affichage des contenus graphiques projetés par les projecteurs 21, 22, 23 dans le champ de vision 200 associé au point de vue 20 selon lequel ces contenus graphiques sont vus par le conducteur. Les contenus graphiques ou images affichées dans chaque plan image 201, 202, 203 se superposent visuellement, seule la profondeur (c'est-à-dire la distance entre le plan image et le point de vue 20) variant selon le plan image 201, 202, 203 lorsque le point de vue 20 ne bouge pas.

L'architecture du système VTH multiplans ne se limite pas aux exemples décrits précédemment mais s'étend à toute architecture connue de l'homme du métier, par exemple à une architecture comprenant un projecteur laser, un diffuseur et un combineur holographique tel que décrit dans le document intitulé « A multi-plane augmented reality head-up display system based on volume holographic optical elements with large area », de Zhenlv Lv, Juan Liu and Liangfa Xu, publié an août 2021 dans IEEE Photonics Journal.

Un processus de contrôle d'un système VTH multiplans tel que le système VTH multiplans 2 pour l'affichage de contenus graphiques sur différents plans image tels que les plans image 201, 202, 203 est avantageusement mis en œuvre par un ou plusieurs processeurs, par exemple par un ou plusieurs processeurs d'un ou plusieurs calculateurs du véhicule 10, par exemple le calculateur contrôlant le système LAS ou le calculateur contrôlant le système LAS en combinaison avec le calculateur contrôlant le système VTH multiplans lorsque ces deux systèmes sont contrôlés par deux calculateurs différents.

Dans une première opération du processus, des données représentatives d'un risque de sortie de voie (franchissement d'une ligne de marquage au sol) et/ou de collision latérale avec un autre véhicule 10 localisé sur une voie de circulation adjacente à une voie de circulation courante du véhicule 10 sont reçues.

Ces données sont reçues depuis un ou plusieurs capteurs embarqués dans le véhicule 10, dit capteurs de détection d'objet ou capteurs d'environnement, par exemple depuis un ou plusieurs radars, un ou plusieurs lidars et/ou une ou plusieurs caméras et/ou d'un ou plusieurs systèmes ou dispositifs embarqués, tels que les capteurs et systèmes décrits précédemment.

Ces données sont par exemple reçues directement d'un ou plusieurs de ces capteurs et/ou systèmes ou d'un calculateur contrôlant ce ou ces capteurs et/ou système.

Ces données correspondent à une ou plusieurs des données suivantes, selon toutes combinaisons possibles :
- des premières données représentatives d'une distance entre le véhicule 10 et la ligne de marquage au sol de laquelle le véhicule 10 se rapproche ou que le véhicule 10 a franchi ;
- des deuxièmes données représentatives d'un nombre de franchissements de la ligne de marquage au sol pendant un intervalle temporel d'une durée déterminée, par exemple le nombre de franchissements détectés sur les 5, 10, 20 ou 30 dernières secondes en prenant comme référence l'instant courant ; et
- des troisièmes données représentatives de présence d'au moins un autre véhicule sur une voie de circulation adjacente à une voie de circulation courante du véhicule, la voie de circulation courante et la voie de circulation adjacente étant séparée par la ligne de marquage au sol ; et
- des quatrièmes données représentatives de géométrie (courbure, rétrécissement de chaussée, pente, etc.) d'au moins une portion de route située devant le véhicule 10 selon un sens de circulation du véhicule 10.

Dans une deuxième opération du processus, un niveau de risque associé au franchissement de la ligne de marquage au sol est déterminé à partir des données obtenues ou reçues à la première opération.

Ce niveau de risque associé au franchissement de la ligne de marquage au sol est également représentatif d'un risque de collision, le cas échéant, le risque de collision existant lorsque le véhicule 10 se rapproche ou franchit la ligne de marquage au sol et qu'un autre véhicule est détecté sur la voie de circulation adjacente.

Ce niveau de risque est par exemple déterminé par le système LAS en fonction des données obtenues à la première opération.

Le niveau de risque fournit une information sur la criticité de situations de vie du véhicule entrainant un risque de sécurité pour le véhicule 10 et les autres usagers de la route.

Ce niveau de risque est par exemple déterminé à partir d'une ou plusieurs règles paramétriques prenant en considération un ensemble de paramètres comprenant par exemple la distance entre le véhicule 10 et la ligne de marquage au sol la plus proche, la fréquence ou le nombre de franchissements de la ligne sur l'intervalle temporel, la présence d'un autre véhicule sur la voie de circulation adjacente et/ou la présence d'un virage à une distance déterminée du véhicule 10 devant le véhicule 10.

Le niveau de risque augmente par exemple lorsque :
- la distance entre le véhicule 10 et la ligne de marquage au sol la plus proche ; et/ou
- la fréquence ou le nombre de franchissements de la ligne par intervalle temporel augmente ; et/ou
- un autre véhicule est détecté sur la voie de circulation adjacente ; et/ou
- la distance latérale entre le véhicule 10 et l'autre véhicule augmente ; et/ou
- un virage est détecté devant le véhicule 10.

Le niveau de risque augmente par exemple d'autant plus que le nombre de conditions (listées ci-dessus) est remplie.

Plus le niveau de risque augmente, plus l'urgence pour prendre les mesures et actions adéquates augmente pour prévenir la sortie de voie et/ou la collision avec un autre véhicule.

Le niveau de risque est par exemple décrit par une valeur comprise entre 0 et 1, 0 représentant le niveau de risque minimal et 1 le niveau de risque maximal.

Une alerte de sécurité est générée par le système LAS selon le niveau de risque détecté, l'alerte de sécurité générée correspondant à un contenu graphique (comprenant du texte, un ou plusieurs pictogrammes ou icônes, un témoin de sécurité et/ou une image) dont le contenu varie selon le niveau de risque déterminé.

Selon un autre exemple, le niveau de risque est sélectionné dans un ensemble de niveaux de risque comprenant un nombre déterminé de niveaux de risque, par exemple 3, 5 ou 10 niveaux de risque selon par exemple la ou les conditions remplies.

En prenant pour exemple un nombre de niveaux de risques égal à 3, l'ensemble de niveaux de risque comprend :
- un premier niveau de risque (aussi appelé premier niveau de criticité), noté C1, correspondant au niveau de risque le plus élevé ;
- un deuxième niveau de risque (aussi appelé deuxième niveau de criticité), noté C2, avec C1 > C2 ; et
- un troisième niveau de risque (aussi appelé troisième niveau de criticité), noté C3, correspondant au niveau de risque le plus faible, avec C1 > C2 > C3.

C1 correspond par exemple à un niveau dit très élevé, C2 à un niveau dit élevé (ou intermédiaire) et C3 à un niveau dit moyen (ou faible).

Selon cet exemple, l'alerte de sécurité (correspondant par exemple à une alerte de franchissement de ligne et/ou de collision) générée varie selon le niveau de risque avec une première alerte de sécurité pour le premier niveau C1, une deuxième alerte de sécurité pour le deuxième niveau C2 et une troisième alerte de sécurité pour le troisième niveau C2, le contenu de l'alerte de sécurité rendue pour le conducteur du véhicule 10 variant selon le niveau de risque associé (par exemple le contenu graphique et/ou le contenu sonore varie pour marquer le niveau de risque associé).

Bien entendu, le nombre d'alertes de sécurité et de valeur de niveau de risque n'est pas limité à 3 mais s'étend par exemple à 2, 4, 5, 10 ou plus.

Dans une troisième opération du processus, un plan image est sélectionné parmi la pluralité de plans image en fonction du niveau de risque, la pluralité de plans images correspondant à l'ensemble de plans image pour lequel le système VTH multiplans 2 est configuré pour afficher une ou plusieurs images représentatives du contenu graphique de l'alerte de sécurité générée avec le niveau de risque déterminé à la deuxième opération. Le plan image est ainsi sélectionné dynamiquement en fonction du niveau de risque déterminé.

Une information de distance représentative de la distance (ou profondeur) entre un point de vue associé à une position de conduite du véhicule 10 et chaque plan image est par exemple associée à chaque plan image disponible pour le système VTH multiplans 2. La sélection du plan image est ainsi par exemple fonction de cette information, la sélection étant telle que la distance entre le plan image sélectionné et le point de vue diminue lorsque le niveau de risque augmente.

Ainsi, en reprenant l'exemple précédent selon lequel le système VTH multiplans est configuré pour générer 3 contenus graphiques d'alerte de sécurité avec chacune un niveau de risque associé, le plan image sélectionné correspond au :
- premier plan image 201 (c'est-à-dire le plan image le plus proche du point de vue associé à la position de conduite) lorsque l'alerte de sécurité correspond à la première alerte de sécurité avec le niveau de risque C1 ;
- deuxième plan image 202 (c'est-à-dire le plan image intermédiaire vis-à-vis du point de vue associé à la position de conduite) lorsque l'alerte de sécurité correspond à la deuxième alerte de sécurité avec le niveau de risque C2 ; et
- troisième plan image 203 (c'est-à-dire le plan image le plus éloigné du point de vue associé à la position de conduite) lorsque l'alerte de sécurité correspond à la troisième alerte de sécurité avec le niveau de risque C3.

Selon un exemple de réalisation particulier, la sélection du plan image est fonction d'un résultat de la comparaison du niveau de risque à un ensemble de valeurs seuils comprenant une ou plusieurs valeurs seuils.

Par exemple, lorsque le niveau de risque correspond à une valeur comprise entre 0 et 1 et que le nombre d'alertes de sécurité générées est limité (par exemple égale à 1, 2, 3 ou 5), le niveau de risque est comparé à l'ensemble de valeurs seuils qui comprend autant de valeurs seuils qu'il existe de nombre d'alertes de sécurité générées par le système LAS.

Par exemple, si l'ensemble de valeurs seuils comprend une première valeur seuil et une deuxième valeur seuil, la deuxième valeur seuil étant supérieure à la première valeur seuil :
- le contenu graphique associé à l'alerte de sécurité générée est affiché sur un premier plan image de la pluralité de plans images lorsque le niveau de risque dépasse la première valeur seuil, une première information de distance étant associée au premier plan image,
- le contenu graphique associé à l'alerte de sécurité générée est affiché sur un deuxième plan image de la pluralité de plans images lorsque le niveau de risque dépasse la deuxième valeur seuil, une deuxième information de distance étant associée au deuxième plan image, la deuxième distance étant inférieure à la première distance.

Ainsi, en reprenant l'exemple précédent selon lequel le système VTH est configuré pour générer 3 alertes de sécurité avec chacune un niveau de risque associé, le plan image sélectionné correspond au :
- troisième plan image 203 lorsque le niveau de risque associé à l'alerte de sécurité passe au-dessus d'une première valeur seuil (par exemple égale à C3) ;
- deuxième plan image 202 lorsque le niveau de risque associé à l'alerte de sécurité passe au-dessus d'une deuxième valeur seuil (par exemple égale à C2, avec C2 > C3) ; et
- premier plan image 201 lorsque le niveau de risque associé à l'alerte de sécurité passe au-dessus d'une troisième valeur seuil (par exemple égale à C1, avec C1 > C2 > C3).

Dans une quatrième opération du processus, le système VTH multiplans 2 est contrôlé pour afficher un contenu graphique représentatif de l'alerte de sécurité sur le plan image sélectionné à la troisième opération du processus.

Selon le type et l'architecture du système VTH multiplans, le contrôle du système VTH multiplans comprend :
- une sélection d'un projecteur parmi un ensemble de projecteurs du système VTH multiplans pour projeter le contenu graphique ; et/ou
- une sélection d'un miroir parmi un ensemble de de miroirs du système VTH multiplans pour recevoir un faisceau lumineux représentatif du contenu graphique ; et/ou
- un contrôle d'une orientation du miroir vis-à-vis du projecteur.

Un tel contrôle permet d'afficher ou projeter le contenu graphique représentatif de l'alerte de sécurité générée dans le champ de vision du conducteur avec une proximité du conducteur qui augmente lorsque le niveau de risque augmente (c'est-à-dire lorsque le danger augmente), la distance entre le conducteur et le plan image sélectionné diminuant lorsque le niveau de risque augmente.

Cela permet de mieux attirer l'attention du conducteur au fur et à mesure que le niveau de risque augmente pour que l'alerte de sécurité n'échappe pas à l'attention du conducteur lorsque l'alerte devient critique, voire très critique.

Pour augmenter la visibilité du contenu graphique représentatif de l'alerte de sécurité, le contenu graphique de l'alerte de sécurité varie selon le niveau de risque associé à l'alerte de sécurité selon un exemple de réalisation particulier.

Par exemple, en reprenant l'exemple précédent selon lequel le système VTH est configuré pour générer 3 alertes de sécurité avec chacune un niveau de risque associé :
- le contenu graphique de l'alerte de sécurité affiché sur le premier plan image 201, c'est-à-dire avec le niveau de risque C1, est par exemple générée avec une couleur particulière (par exemple dans des teintes de rouge) et/ou une température de couleur particulière et/ou un niveau de transparence particulier (par exemple avec le niveau de transparence le moins élevé) pour mieux attirer l'attention du conducteur et/ou un texte particulier ;
- le contenu graphique de l'alerte de sécurité affiché sur le deuxième plan image 202, c'est-à-dire avec le niveau de risque C2, est par exemple générée avec une couleur particulière (par exemple dans des teintes orangées) et/ou une température de couleur particulière et/ou un niveau de transparence particulier (par exemple avec le niveau de transparence intermédiaire) et/ou un texte particulier ; et
- le contenu graphique de l'alerte de sécurité affiché sur le troisième plan image 203, c'est-à-dire avec le niveau de risque C3, est par exemple générée avec une couleur particulière (par exemple dans des teintes de jaune) et/ou une température de couleur particulière et/ou un niveau de transparence particulier (par exemple avec le niveau de transparence le plus élevé) et/ou un texte particulier.

Selon un autre exemple de réalisation particulier, le processus comprend une opération de traitement de l'image représentative du contenu graphique en fonction du plan image sélectionné. Le traitement comprend par exemple une déformation de l'image (de l'anglais « image warping »), une modification de la transparence, de la luminance, etc.

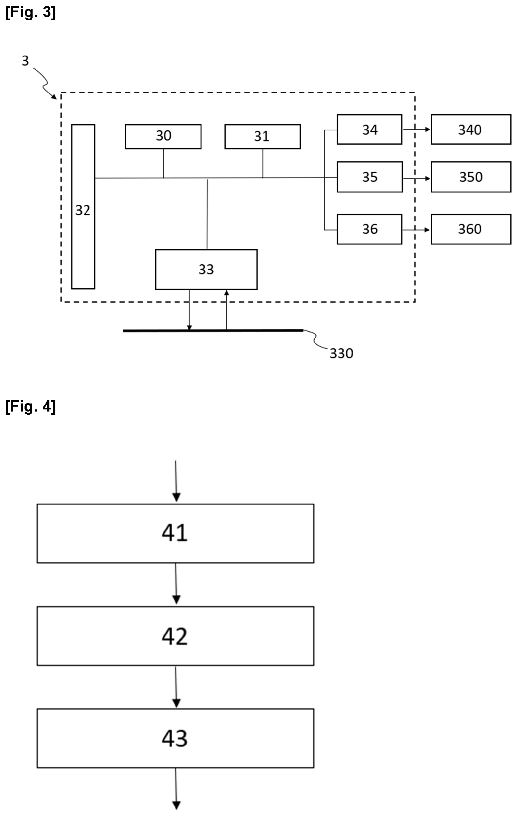

La figure 3 illustre schématiquement un dispositif 3 configuré pour contrôler un système de vision tête-haute multiplans d'un véhicule, par exemple le système VTH multiplans 2 du véhicule 10, selon des exemples de réalisation particuliers et non limitatifs de la présente invention. Le dispositif 3 correspond par exemple à un dispositif embarqué dans le véhicule 10, par exemple un calculateur. Selon une variante, le dispositif 3 correspond à un dispositif configuré pour contrôler un système LAS.

Le dispositif 3 est par exemple configuré pour la mise en œuvre des opérations décrites en regard des figures 1 à 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un système de projection 340 (correspondant par exemple au projecteur 24), un élément d'entrainement 350 (correspondant par exemple au moteur électrique 25) et/ou d'autres périphériques 360 (écrans, haut-parleurs) via respectivement des interfaces de sortie 34, 35 et 36. Selon une variante, l'un ou l'autre des dispositifs externes est intégré au dispositif 3.

La figure 4 illustre un organigramme des différentes étapes d'un procédé de contrôle d'un système de vision tête-haute multiplans d'un véhicule, par exemple le système VTH multiplans 2 du véhicule 10, selon un exemple de réalisation particulier et non limitatif de la présente invention. Le système VTH multiplans est configuré pour un affichage d'images dans une pluralité de plans image, le véhicule embarquant un système de sécurité latérale active, dit système LAS. Le procédé est par exemple mis en œuvre par un dispositif de contrôle embarqué dans le véhicule 10, par exemple le dispositif 3 de la figure 3.

Dans une première étape 41, un niveau de risque associé à un franchissement d'une ligne de marquage au sol est déterminé en fonction de données obtenues d'un ensemble de capteurs et/ou systèmes embarqués dans le véhicule.

Dans une deuxième étape 42, un plan image est sélectionné parmi la pluralité de plans image en fonction du niveau de risque.

Dans une troisième étape 43, le système VTH multiplans est contrôlé pour afficher un contenu graphique représentatif d'une alerte de sécurité générée par le système LAS sur le plan image sélectionné.

Selon une variante, les variantes et exemples des opérations décrits en relation avec l'une des figures 1 à 2 s'appliquent aux étapes du procédé de la figure 4.

Bien entendu, la présente invention ne se limite pas aux exemples de réalisation décrits ci-avant mais s'étend à un procédé de contrôle d'affichage d'un ensemble de contenus graphiques dans un ensemble de plans image qui inclurait des étapes secondaires sans pour cela sortir de la portée de la présente invention. Il en serait de même d'un dispositif configuré pour la mise en œuvre d'un tel procédé.

La présente invention concerne également un système VTH multiplans pour véhicule comprenant le dispositif 3 de la figure 3 ainsi qu'un véhicule, par exemple automobile, comprenant le système VTH multiplans ou le dispositif 3 de la figure 3.

## Revendications

1. Procédé de contrôle d'un système de vision tête haute multiplans (2), dit système VTH multiplans, d'un véhicule (10), ledit système VTH multiplans (2) étant configuré pour un affichage d'images dans une pluralité de plans image (201, 202, 203), ledit véhicule embarquant un système de sécurité latérale active, dit système LAS, ledit procédé étant mis en œuvre par au moins un processeur et comprenant les étapes suivantes :
- détermination (41) d'un niveau de risque associé à un franchissement d'une ligne de marquage au sol en fonction des données obtenues d'un ensemble de capteurs et/ou systèmes embarqués dans ledit véhicule (10) ;
- sélection (42) d'un plan image, dit plan image sélectionné, parmi ladite pluralité de plans image (201, 202, 203) en fonction dudit niveau de risque ;
- contrôle (43) dudit système VTH multiplans (2) pour afficher un contenu graphique représentatif d'une alerte de sécurité générée par ledit système LAS sur ledit plan image sélectionné.

2. Procédé selon la revendication 1, pour lequel lesdites données appartiennent à un ensemble de données comprenant :
- des premières données représentatives d'une distance entre ledit véhicule (10) et ladite ligne de marquage au sol ;
- des deuxièmes données représentatives d'un nombre de franchissements de ladite ligne de marquage au sol pendant un intervalle temporel d'une durée déterminée ; et
- des troisièmes données représentatives de présence d'au moins un autre véhicule sur une voie de circulation adjacente à une voie de circulation courante dudit véhicule (10), ladite voie de circulation courante et ladite voie de circulation adjacente étant séparée par ladite ligne de marquage au sol ; et
- des quatrièmes données représentatives de géométrie d'au moins une portion de route située devant ledit véhicule (10) selon un sens de circulation dudit véhicule (10).

3. Procédé selon la revendication 1 ou 2, pour lequel, une information de distance étant associée à chaque plan image de ladite pluralité de plans image (201, 202, 203), ladite information de distance étant représentative d'une distance entre un point de vue associé à une position de conduite dudit véhicule (10) et ledit chaque plan image, la sélection (53) dudit plan image étant telle que la distance entre ledit plan image sélectionné et ledit point de vue diminue lorsque ledit niveau de risque augmente.

4. Procédé selon l'une des revendications 1 à 3, comprenant en outre une étape de comparaison dudit niveau de risque à un ensemble de valeurs seuils comprenant au moins une valeur seuil, la sélection (42) du plan image étant en outre fonction d'un résultat de ladite comparaison.

5. Procédé selon la revendication 4 en dépendance de la revendication 3, pour lequel ledit ensemble de valeurs seuils comprenant une première valeur seuil et une deuxième valeur seuil, ladite deuxième valeur seuil étant supérieure à ladite première valeur seuil,
ledit contenu graphique étant affiché sur un premier plan image de ladite pluralité de plans images lorsque ledit niveau de risque dépasse la première valeur seuil, une première information de distance étant associée audit premier plan image, ladite première information de distance étant représentative d'une première distance entre ledit point de vue et ledit premier plan image,
ledit contenu graphique étant affiché sur un deuxième plan image de ladite pluralité de plans images lorsque ledit niveau de risque dépasse la deuxième valeur seuil, une deuxième information de distance étant associée audit deuxième plan image, ladite deuxième information de distance étant représentative d'une deuxième distance entre ledit point de vue et ledit deuxième plan image,
ladite deuxième distance étant inférieure à ladite première distance.

6. Procédé selon l'une des revendications 1 à 5, pour lequel ledit contenu graphique est fonction dudit niveau de risque.

7. Procédé selon l'une des revendications 1 à 6, pour lequel ledit contrôle dudit système VTH multiplans (2) comprend :
- une sélection d'un projecteur parmi un ensemble de projecteurs (21, 22, 23) dudit système VTH multiplans (2) pour projeter ledit contenu graphique ; et/ou
- une sélection d'un miroir parmi un ensemble de miroirs (24) dudit système VTH multiplans (2) pour recevoir un faisceau lumineux représentatif dudit contenu graphique ; et/ou
- un contrôle d'une orientation dudit miroir (24) vis-à-vis dudit projecteur.

8. Programme d'ordinateur comportant des instructions pour la mise en œuvre du procédé selon l'une quelconque des revendications 1 à 7, lorsque ces instructions sont exécutées par au moins un processeur.

9. Dispositif (3) de contrôle d'un système de vision tête haute multiplans d'un véhicule, ledit dispositif (3) comprenant une mémoire (31) associée à au moins un processeur (30) configuré pour la mise en œuvre des étapes du procédé selon l'une quelconque des revendications 1 à 7.

10. Véhicule (10) comprenant le dispositif (3) selon la revendication 9.
